(19) Europäisches Patentamt
European Patent Office
Office européen des brevets

(11) **EP 4 469 322 B1**

(12) **FASCICULE DE BREVET EUROPÉEN**

(45) Date de publication et mention
de la délivrance du brevet:
**19.11.2025 Bulletin 2025/47**

(21) Numéro de dépôt: **22838909.4**

(22) Date de dépôt: **07.12.2022**

(51) Classification Internationale des Brevets (IPC):
***B60W 30/14*** *(2006.01)*

(52) Classification Coopérative des Brevets (CPC):
**B60W 30/143;** B60W 2520/10; B60W 2720/106

(86) Numéro de dépôt international:
**PCT/FR2022/052270**

(87) Numéro de publication internationale:
**WO 2023/144464 (03.08.2023 Gazette 2023/31)**

(54) **PROCÉDÉ ET DISPOSITIF DE CONTRÔLE D'ACCÉLÉRATION D'UN VÉHICULE EMBARQUANT UN SYSTÈME DE RÉGULATION DE VITESSE**

VERFAHREN UND VORRICHTUNG ZUR STEUERUNG DER BESCHLEUNIGUNG EINES FAHRZEUGS MIT EINEM BORDGESCHWINDIGKEITSREGELSYSTEM

METHOD AND DEVICE FOR CONTROLLING THE ACCELERATION OF A VEHICLE COMPRISING AN ON-BOARD CRUISE CONTROL SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **26.01.2022 FR 2200649**

(43) Date de publication de la demande:
**04.12.2024 Bulletin 2024/49**

(73) Titulaire: **Stellantis Auto SAS**
**78300 Poissy (FR)**

(72) Inventeur: **VIVET, Luc**
**75016 PARIS 16 (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**US-A1- 2018 126 987     US-A1- 2018 237 011**
**US-A1- 2020 001 878**

**Description**

**Domaine technique**

La présente invention concerne les procédés et dispositifs de contrôle de l'accélération d'un véhicule, notamment un véhicule automobile. La présente invention concerne également un procédé et un dispositif de contrôle d'un système de régulation de vitesse d'un véhicule. La présente invention concerne également un procédé et un dispositif de contrôle d'un véhicule, notamment un véhicule autonome.

**Arrière-plan technologique**

Certains véhicules contemporains sont équipés de fonctions ou système(s) ou d'aide à la conduite, dit ADAS (de l'anglais « Advanced Driver-Assistance System » ou en français « Système d'aide à la conduite avancé »).
Parmi ces systèmes, le système de régulation de vitesse ou le système de régulation adaptative de vitesse, dit ACC (de l'anglais « Adaptive Cruise Control ») a pour fonction première la régulation automatiquement (de façon adaptative pour le système ACC) de la vitesse des véhicules qui en sont équipés en fonction de leur environnement.
Le système de régulation de vitesse détermine une ou plusieurs consignes d'accélération pour atteindre une vitesse de consigne, par exemple réglée par le conducteur du véhicule.
Le système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.
Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. Un tel véhicule est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.
Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.
Le confort des passagers d'un véhicule est un autre facteur important, notamment pour l'acceptation des systèmes d'aide à la conduite des véhicules. Par exemple, une accélération trop importante est une cause d'inconfort pour les passagers d'un véhicule, notamment lorsque l'accélération est contrôlée par un système de régulation de vitesse. Des accélérations importantes sont par exemple dues à une augmentation de la vitesse de consigne par le conducteur. Le compromis entre le confort dynamique des passagers et la rapidité de la stabilisation de la vitesse jusqu'à atteindre la vitesse de consigne est parfois difficile à trouver.
En outre l'état de la technique est connu du document US2018126987A1.

**Résumé de la présente invention**

Un objet de la présente invention est de résoudre au moins l'un des problèmes de l'arrière-plan technologique décrit précédemment.
Un autre objet de la présente invention est d'améliorer la régulation de l'accélération d'un véhicule.
Selon un premier aspect, la présente invention concerne un procédé de contrôle d'accélération d'un véhicule embarquant un système de régulation de vitesse, le procédé comprenant les étapes suivantes :

- réception d'une information représentative d'une vitesse de consigne pour le système de régulation de vitesse ;
- détermination d'une différence entre la vitesse de consigne et une vitesse courante du véhicule ;
- détermination d'un paramètre représentatif d'une valeur d'accélération maximale pour le système de régulation de vitesse en fonction d'un signe de la différence, de la valeur absolue de la différence, d'une valeur de secousse déterminée et d'un coefficient constant déterminé ;
- contrôle de l'accélération du véhicule en fonction du paramètre, le paramètre, noté $A_{max}(DV)$, étant égal à :

$$A_{max}(DV) = sign(DV) * \sqrt{k * j0 * |DV|},$$

avec DV correspondant à la différence avec $DV = V_{cons} - V_{cour}$, où $V_{cons}$ correspond à la vitesse de consigne et $V_{cour}$ à la vitesse courante dudit véhicule, j0 correspondant à la valeur de secousse déterminée et k correspondant au coefficient constant déterminé.

Un tel procédé permet d'améliorer la régulation de l'accélération du véhicule en déterminant un paramètre du système de régulation qui fixe l'accélération maximale à partir de la différence entre la vitesse de consigne et la vitesse courante du véhicule. Cela permet de réguler l'accélération en fonction de la différence entre la vitesse de consigne et la vitesse du véhicule, permettant par exemple de maximiser l'accélération lorsque la différence entre la vitesse de consigne et la vitesse du véhicule est importante et de réduire l'accélération au fur et à mesure que la différence diminue.

Cela permet ainsi de trouver un compromis entre la rapidité de stabilisation de la vitesse (par exemple pour atteindre la vitesse de consigne) et le confort dynamique des passagers en régulant l'accélération du véhicule via le système de régulation de vitesse en fonction de la valeur de la différence entre la vitesse de consigne et la vitesse du véhicule.

Selon une variante, la valeur de secousse j0 est égale à 0.55 m.s$^{-3}$ et le coefficient k est égal à 8/27.

Selon une variante supplémentaire, le paramètre est compris entre une limite inférieure déterminée, notée $A_{inf}$, et une limite supérieure déterminée, notée $A_{sup}$.

Selon encore une variante, la limite inférieure $A_{int}$ est égale à -1.5 m.s$^{-2}$ et la limite supérieure $A_{sup}$ est égale à 1.5 m.s$^{-2}$.

Selon une variante additionnelle, le système de régulation de vitesse correspond à un système de régulation adaptative de vitesse.

Selon un deuxième aspect, la présente invention concerne un dispositif de contrôle d'accélération d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :

[Fig. 1] illustre schématiquement un environnement d'un véhicule, selon un exemple de réalisation particulier et non limitatif de la présente invention ;

[Fig. 2] illustre un diagramme représentant une courbe d'un paramètre représentatif d'une accélération maximale du véhicule de la figure 1 en fonction d'une différence entre une vitesse de consigne et une vitesse du véhicule de la figure 1, selon un exemple de réalisation particulier et non limitatif de la présente invention ;

[Fig. 3] illustre schématiquement un dispositif configuré pour contrôler l'accélération du véhicule de la figure 1, selon un exemple de réalisation particulier et non limitatif de la présente invention ;

[Fig. 4] illustre un organigramme des différentes étapes d'un procédé de contrôle d'accélération du véhicule de la figure 1, selon un exemple de réalisation particulier et non limitatif de la présente invention.

## Description des exemples de réalisation

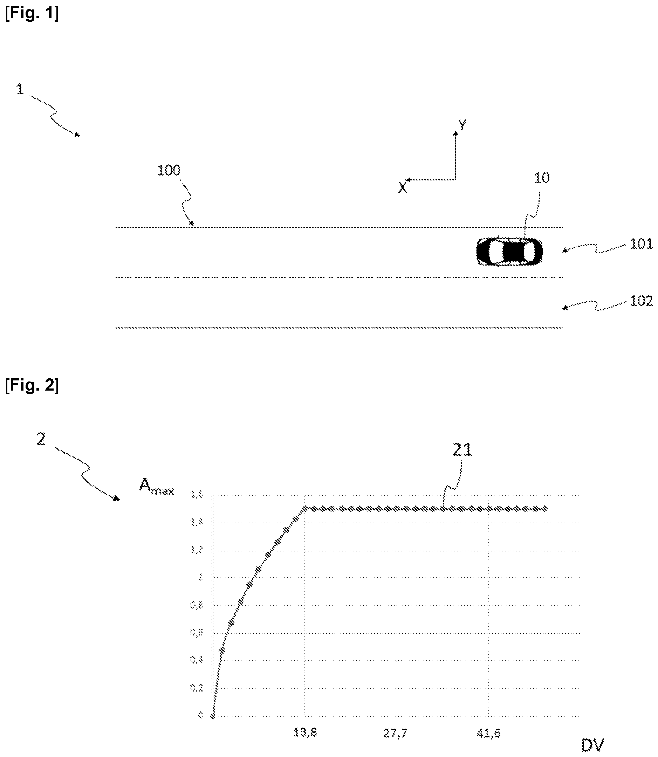

Un procédé et un dispositif de contrôle d'accélération d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle de l'accélération d'un véhicule, par exemple par un système de régulation de vitesse embarqué dans le véhicule, comprend la réception d'une information représentative d'une vitesse de consigne pour le système de régulation de vitesse. Cette consigne de vitesse est par exemple paramétrée par le conducteur du véhicule par l'intermédiaire d'une interface homme-machine, dite IHM. Une différence entre la vitesse de consigne et la vitesse du véhicule est déterminée ou calculée, par exemple stockée en mémoire. Un paramètre du système de régulation de vitesse représentatif d'une vitesse d'accélération maximale (correspondant par exemple à un paramètre appelé accélération potentielle brute) est déterminé ou calculé en fonction d'un signe de la différence entre la vitesse de consigne et la vitesse du véhicule, de la valeur absolue de cette différence, d'une valeur de secousse déterminée et d'un coefficient constant déterminé. Enfin, l'accélération du véhicule est déterminée en fonction du paramètre, en vue de réguler l'accélération du véhicule, par le système de régulation de vitesse, en fonction de la différence entre la vitesse de consigne et la vitesse, par exemple courante, du véhicule.

Une accélération potentielle brute correspond par exemple à une consigne d'accélération déterminée ou calculée par le système de régulation de vitesse, avant un éventuel filtrage pour améliorer par exemple le confort ou la sécurité des passagers du véhicule.

Le paramètre représentatif de l'accélération maxime représente par exemple le maximum d'accélération que le système de régulation peut appliquer pour contrôler l'accélération du véhicule.

Le coefficient k est par exemple choisi de telle manière que la valeur du paramètre représentatif de l'accélération maximale augmente avec la différence de vitesse, l'accélération maximale étant par exemple d'autant plus élevée que la différence entre la vitesse de consigne et la vitesse du véhicule est élevée.

Une valeur de secousse correspond avantageusement à une grandeur représentant une variation de l'accélération dans le temps, exprimée en m.s$^{-3}$.

La figure 1 illustre schématiquement un environnement 1 d'un véhicule 10, selon un exemple de réalisation particulier et non limitatif de la présente invention.

La figure 1 illustre un véhicule 10, par exemple un véhicule automobile, embarquant un ou plusieurs capteurs configurés pour détecter la présence d'objets dans l'environnement 1 du véhicule 10. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond à un véhicule circulant sous la supervision totale d'un conducteur ou circulant dans un mode autonome ou semi-autonome. Le véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le véhicule 10 circule sur une portion de route 100 à deux voies de circulations 101, 102. Le véhicule 10 circule par exemple sur la voie de circulation de droite 101, les deux voies de circulation 101 et 102 étant selon un même sens de circulation ou selon des sens de circulation contraires.

Le véhicule 10 embarque par exemple un ou plusieurs des capteurs suivants :

- un ou plusieurs radars à ondes millimétriques arrangés sur le véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple un véhicule circulant devant le véhicule 10), dans le but de détecter des obstacles et leurs distances vis-à-vis du véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple un véhicule circulant devant le véhicule 10) situés dans le faisceau lumineux émis et de mesurer la distance entre le capteur et chaque objet détecté ; et/ou

- une ou plusieurs caméras (associées ou non à un capteur de profondeur) pour l'acquisition d'une ou plusieurs images de l'environnement autour du véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple un véhicule circulant devant le véhicule 10, et d'en déduire un ou plusieurs paramètres dynamiques de l'objet mobile tels que la vitesse latérale, la vitesse longitudinale et/ou les accélérations latérale et longitudinale.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le véhicule 10. Un tel système ADAS est configuré pour assister, voire remplacer, le conducteur du véhicule 10 pour contrôler le véhicule 10 sur son parcours.

Selon un premier exemple, le véhicule 10 embarque un système ADAS correspondant à un système de régulation automatique de la vitesse, dit système CC (de l'anglais « Cruise Control »). Un tel système est destiné à stabiliser automatiquement la vitesse du véhicule autour d'une vitesse de consigne fixée par le conducteur du véhicule 10, par exemple via une manette de contrôle arrangée près du volant, sans que le conducteur n'ait à appuyer sur la pédale d'accélérateur. Le système CC gère la vitesse en déterminant ou calculant des valeurs d'accélération de consigne évoluant au cours du temps en fonction de la vitesse courante du véhicule (par exemple obtenue d'un capteur de vitesse embarqué dans le véhicule 10, par exemple un odomètre) et en fonction de la vitesse de consigne fixée par le conducteur. Ainsi, les données obtenues du ou des capteurs de vitesse embarqués dans le véhicule 10 permettent au système CC du véhicule 10 d'établir une valeur cible d'accélération $A_{cible}(t)$ (correspondant par exemple à l'accélération potentielle brute déterminée comme décrit ci-après) au cours du temps 't'. L'accélération cible $A_{cible}(t)$ devient une consigne d'accélération longitudinale $A_{consigne}(t)$, avec optionnellement un ou plusieurs filtrages réalisés sur $A_{cible}(t)$ pour obtenir $A_{consigne}(t)$.

Selon un deuxième exemple, le véhicule 10 embarque un système ADAS correspondant à un système de régulation adaptative de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du véhicule 10, c'est à dire d'un véhicule cible circulant devant le véhicule 10 dans le même sens de circulation sur la même voie de circulation. Les données obtenues du ou des capteurs embarqués dans le véhicule 10 permettent au système ACC du véhicule 10 d'établir une valeur cible d'accélération $A_{cible}(t)$ (dont un maximum correspond par exemple à l'accélération potentielle brute déterminée comme décrit ci-après) au cours du temps 't'. L'accélération cible $A_{cible}(t)$ devient une consigne d'accélération longitudinale $A_{consigne}(t)$, avec optionnellement un ou plusieurs filtrages réalisés sur $A_{cible}(t)$ pour obtenir $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du véhicule 10, notamment pour que ce(s) dernier(s) détermine(nt) les consignes de couple à générer par le groupe motopropulseur pour respecter les consignes d'accélération $A_{consigne}(t)$ et réguler la vitesse longitudinale du véhicule 10.

Une valeur d'accélération cible est par exemple déterminée à un instant courant $t_0$ à partir d'un ensemble de données obtenues d'un ou plusieurs capteurs de détection d'objet embarqués dans le véhicule 10 et/ou de paramètres de consigne entrés par exemple par le conducteur ou déterminés à partir de données sur l'environnement du véhicule 10. La valeur d'accélération cible (exprimée en $m.s^{-2}$) est par exemple calculée à partir de :

- données représentatives du comportement dynamique d'un véhicule circulant devant le véhicule 10 (par exemple vitesse et/ou accélération) et correspondant à l'objet cible du système ACC, ces données étant par exemple obtenue à partir d'un ensemble de positions prises par ce véhicule circulant devant sur un intervalle de temps précédant l'instant courant $t_0$ pour lequel est déterminée l'accélération cible ;
- données représentatives du comportement dynamique du véhicule 10 (par exemple vitesse, accélération, distance vis-à-vis du deuxième véhicule 11), ces données étant obtenues de capteurs embarqués dans le véhicule 10, la distance étant par exemple obtenue à partir des données reçues du ou des capteurs de détection d'objet ; et/ou
- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Selon un troisième exemple, le véhicule 10 embarque à la fois un système CC et un système ACC ou un seul et même système embarqué dans le véhicule 10 met en œuvre la fonction CC et la fonction ACC. En l'absence de véhicule cible détecté devant le véhicule 10, seul le système CC ou la fonction CC est mise en œuvre.

Un processus de contrôle de l'accélération du véhicule 10 est avantageusement mis en œuvre par le véhicule 10, c'est-à-dire par un calculateur ou une combinaison de calculateurs du système embarqué du véhicule 10, par exemple par le ou les calculateurs en charge de contrôler le système CC et/ou le système ACC.

Dans une première opération, une information représentative d'une vitesse de consigne pour le système de régulation de vitesse est reçue. Cette information correspond par exemple à une valeur de vitesse en $m.s^{-1}$ réglée, paramétrée ou entrée par le conducteur du véhicule 10 via une IHM, par exemple une manette de contrôle du système de régulation de vitesse, une IHM graphique affiché sur un écran, par exemple tactile, embarqué dans le véhicule ou par commande vocale.

Dans une deuxième opération, la vitesse (par exemple la vitesse longitudinale $V_x$ du véhicule 10 selon l'axe longitudinal X d'un repère X,Y associé au véhicule 10, l'axe longitudinal correspondant à l'axe dans le sens de déplacement du véhicule 10) du véhicule 10 est déterminée ou reçue, par exemple d'un capteur de vitesse de type odomètre.

Dans une troisième opération, la différence, notée DV, entre la vitesse de consigne obtenue à la première opération et la vitesse du véhicule 10 obtenue à la deuxième opération est déterminée ou calculée. A un instant courant 't', la différence DV est ainsi déterminé en fonction de la vitesse de consigne et de la vitesse mesurée ou obtenue à cet instant 't'.

La différence de vitesse DV est obtenue à partir de l'équation suivante :

$$DV = V_{cons} - V_{cour},$$

Avec $V_{cons}$ correspondant à la vitesse de consigne et $V_{cour}$ à la vitesse courante du véhicule mesurée ou obtenue à un instant courant 't'.

La différence DV est par exemple stockée dans une mémoire associée au calculateur mettant en œuvre le processus, par exemple de manière transitoire.

Dans une quatrième opération, un paramètre du système de régulation de vitesse représentatif d'une valeur d'accélération maximale, noté $A_{max}(DV)$, est déterminé ou calculé en fonction d'un signe de la différence DV, de la valeur absolue de la différence DV, d'une valeur de secousse déterminée, notée j0, et d'un coefficient constant déterminé, noté k.

Selon un mode de réalisation particulier, le paramètre $A_{max}(DV)$ augmente avec la différence de vitesse DV, avec par exemple une limite inférieure, notée $A_{inf}$, et une limite supérieure, notée $A_{sup}$. Le paramètre $A_{max}(DV)$ est selon une fonction monotone croissante de la différence DV entre la vitesse de consigne et la vitesse du véhicule 10.

La figure 2 représente un exemple de fonction 21 entre le paramètre $A_{max}(DV)$ (noté $A_{max}$ en ordonné du diagramme 2, en $m.s^{-2}$) et la différence entre la vitesse de consigne et la vitesse du véhicule 10 (notée DV en abscisse du diagramme 2, en $m.s^{-1}$).

Selon l'exemple particulier de la figure 2, le paramètre n'est représenté que pour des valeurs positives d'accélération. Selon cet exemple, $A_{max} = 0$ pour une une différence DV = 0, puis $A_{max}$ augmente selon une fonction strictement croissante déterminée avec DV pour DV compris entre 0 et un premier seuil égal par exemple à $13.8 \, m.s^{-1}$ (soit 50 km/h), $A_{max}$ atteignant une limite supérieure $A_{sup}$ qui est par exemple égale à $1.5 \, m.s^{-2}$. Pour toute valeur de DV supérieure au premier seuil, $A_{max}$ est constante et reste égale à la valeur de $A_{sup}$, par exemple $1.5 \, m.s^{-2}$.

La valeur du paramètre $A_{max}(DV)$ est par exemple obtenue d'une table de correspondance, dite LUT (de l'anglais « Look-Up Table ») stockée dans une mémoire du véhicule 10 associée au calculateur mettant en œuvre le processus. Une table de correspondance met en relation ou en correspondance une valeur de $A_{max}$ pour une valeur de différence de vitesse, pour chaque valeur de DV d'un ensemble de valeurs de différences de vitesse. Si la différence DV calculée est comprise entre deux valeurs de différences DV stockées dans la table, la valeur de $A_{max}$ pour cette différence DV est par exemple obtenue par interpolation des deux valeurs de $A_{max}$ associées aux valeurs de DV de la table entourant la valeur de DV calculée.

Selon l'invention, la valeur du paramètre $A_{max}(DV)$ est obtenue en fonction de la différence de vitesses DV selon la fonction suivante :

[Math 1]

$$A_{\max}(DV) = \text{sign}(DV) * \sqrt{k * j0 * |DV|},$$

avec DV correspondant à la différence (DV = V$_{cons}$ - V$_{cour}$), j0 correspondant à la valeur de secousse déterminée et k correspondant à un coefficient déterminé, k correspondant par exemple à une constante.

Selon un exemple particulier de réalisation, la valeur se secousse j0 est égale à 0.55 m.s$^{-3}$ et le coefficient k est égal à 8/27. Ces deux paramètres du système de régulation de vitesse sont par exemple prédéfinis par le constructeur du véhicule 10 ou par le concepteur du système de régulation de vitesse, ces deux paramètres étant stockés dans une mémoire accessible par le calculateur en charge du processus.

Le coefficient k est avantageusement choisi pour obtenir une fonction monotone croissante de A$_{max}$ en fonction de DV. Le coefficient k est par exemple défini empiriquement ou par simulation sur un outil de simulation d'un système de régulation de vitesse.

Selon une variante de réalisation, ces deux paramètres, ou au moins l'un d'entre eux, est modifiable par un utilisateur, par exemple par le conducteur de la voiture via une IHM et/ou par une personne chargée de l'entretien du véhicule 10, par exemple via un outil de diagnostic.

Selon d'autres exemples, j0 est par exemple égale à 0.3, 0.4, 0.5, 0.6, 0.7 ou 0.8 m.s$^{-3}$ et/ou k est par exemple égal à 1/5, 6/25, 6/27, 7/27, 1/3, 10/27, 2/5 ou tout autre valeur permettant d'avoir A$_{max}$ variant selon une fonction monotone croissante de DV.

Selon un mode de réalisation particulier, la fonction A$_{max}$(DV) est saturée entre deux valeurs, à savoir une valeur minimale ou inférieure A$_{inf}$ et une valeur maximale ou supérieure A$_{sup}$. Cela signifie que A$_{max}$ est bornée ou limitée entre une limite inférieure A$_{inf}$ et une limite supérieure A$_{sup}$, A$_{max}$ prenant toute valeur comprise entre ces deux limites selon une fonction monotone croissante de DV.

A titre d'exemple non limitatif, la limite inférieure A$_{min}$ est égale à -1.5 m.s$^{-2}$, par exemple pour DV = 0, et la limite supérieure A$_{max}$ est égale à 1.5 m.s$^{-2}$, par exemple pour toutes valeurs de DV supérieures ou égales à un seuil déterminé, par exemple pour DV $\geq$ 13.8 m.s$^{-1}$. Selon d'autres exemple, le seuil de DV pour lequel A$_{max}$ = A$_{sup}$ est égal à 10, 11, 12, 14, 15, 16, 20 m.s$^{-1}$ ou plus.

Les valeurs de A$_{inf}$ et A$_{sup}$ correspondent par exemple à des paramètres déterminés ou définis du système de régulation de vitesse et stockés en mémoire. Selon une variante, ces paramètres sont réglables, par exemple par le conducteur de la voiture via une IHM et/ou par une personne chargée de l'entretien du véhicule 10, par exemple via un outil de diagnostic.

Les valeurs prises par A$_{inf}$ et A$_{sup}$ ne se limitent pas à l'exemple ci-dessus. Par exemple, A$_{inf}$ est égale à -2, -1.8, -1.6 m.s$^{-2}$ et A$_{sup}$ est égale à 1.6, 1.8, 2, 2.5 ou 3 m.s$^{-2}$.

Dans une cinquième opération, l'accélération du véhicule 10 est contrôlée en fonction du paramètre représentatif d'accélération maximale obtenu à la quatrième opération en fonction de la différence de vitesse courante DV.

Par exemple, dans le cas d'un système CC, l'accélération de consigne correspond à l'accélération maximale Amax obtenue à la quatrième opération, cette accélération de consigne évoluant au cours du temps en fonction de la vitesse du véhicule et de la différence DV, jusqu'à atteindre la vitesse de consigne, c'est-à-dire jusqu'à ce que DV = 0.

Ainsi, selon l'invention, lorsque DV est grande, l'accélération de consigne est grande (par exemple) et plus DV diminue, c'est-à-dire plus la vitesse du véhicule 10 se rapproche de la vitesse de consigne, plus l'accélération de consigne diminue.

Selon un autre exemple, par exemple dans le cas d'un système ACC, l'accélération est déterminée en fonction des paramètres dynamiques du véhicule 10 et d'un véhicule cible circulant devant le véhicule 10, avec comme contrainte de ne pas dépasser (c'est-à-dire de ne pas être supérieure) à l'accélération maximale A$_{max}$ obtenue à la quatrième opération en fonction de DV.

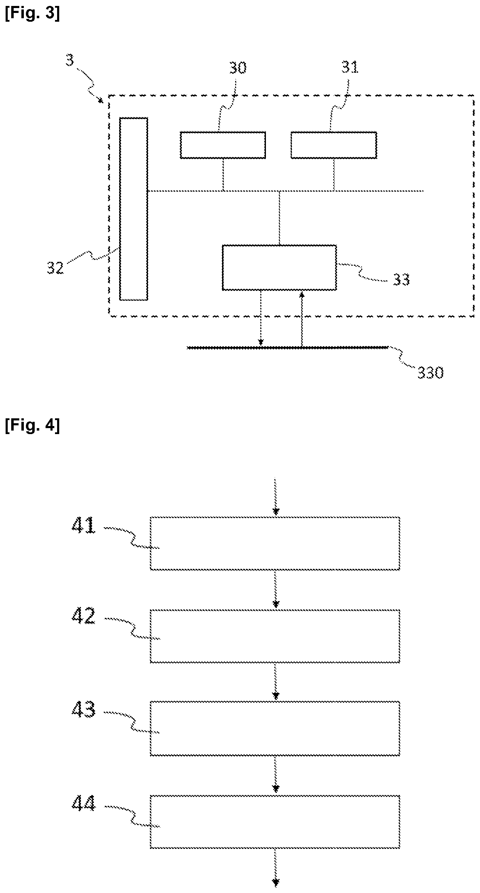

La figure 3 illustre schématiquement un dispositif 3 configuré pour contrôler l'accélération d'un véhicule, par exemple du véhicule 10, selon un exemple de réalisation particulier et non limitatif de la présente invention. Le dispositif 3 correspond par exemple à un dispositif embarqué dans le véhicule 10, par exemple un calculateur.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'accélération d'un véhicule, par exemple du véhicule 10, selon un exemple de réalisation particulier et non limitatif de la présente invention. Le procédé est par exemple mis en œuvre par un dispositif embarqué dans le véhicule 10 ou par le dispositif 3 de la figure 3.

Dans une première étape 41, une information représentative d'une vitesse de consigne pour le système de régulation de vitesse est reçue.

Dans une deuxième étape 42, une différence entre la vitesse de consigne et une vitesse courante du véhicule est déterminée.

Dans une troisième étape 43, un paramètre représentatif d'une valeur d'accélération maximale pour le système de régulation de vitesse est déterminé en fonction d'un signe de la différence, de la valeur absolue de la différence, d'une valeur de secousse déterminée et d'un coefficient constant déterminé.

Dans une quatrième étape 44, l'accélération du véhicule est contrôlée en fonction du paramètre obtenue à la troisième opération 43.

Selon une variante, les variantes et exemples des opérations décrits en relation avec la figure 1 et/ou 2 s'appliquent aux étapes du procédé de la figure 4.

Bien entendu, la présente invention ne se limite pas aux exemples de réalisation décrits ci-avant mais s'étend à un procédé de contrôle d'un système de régulation de vitesse d'un véhicule, par exemple un véhicule autonome, qui inclurait des étapes secondaires sans pour cela sortir de la portée de la présente invention. Il en serait de même d'un dispositif configuré pour la mise en œuvre d'un tel procédé.

La présente invention concerne également un système de régulation de vitesse pour véhicule comprenant le dispositif 3 de la figure 3.

La présente invention concerne également un véhicule, par exemple automobile ou plus généralement un véhicule autonome à moteur terrestre, comprenant le dispositif 3 de la figure 3 ou le système de régulation de vitesse pour véhicule ci-dessus.

## Revendications

1. Procédé de contrôle d'accélération d'un véhicule (10) embarquant un système de régulation de vitesse, ledit procédé comprenant les étapes suivantes :

   - réception (41) d'une information représentative d'une vitesse de consigne pour ledit système de régulation de vitesse ;
   - détermination (42) d'une différence entre ladite vitesse de consigne et une vitesse courante dudit véhicule ;
   - détermination (43) d'un paramètre représentatif d'une valeur d'accélération maximale pour ledit système de régulation de vitesse en fonction d'un signe de ladite différence, de la valeur absolue de ladite différence, d'une valeur de secousse déterminée et d'un coefficient constant déterminé ;
   - contrôle (44) de l'accélération dudit véhicule (10) en fonction dudit paramètre, ledit paramètre, noté $A_{max}(DV)$, étant égal à :

   $$A_{max}(DV) = \text{sign}(DV) * \sqrt{k * j0 * |DV|},$$

   avec DV correspondant à ladite différence avec $DV = V_{cons} - V_{cour}$, où $V_{cons}$ correspond à la vitesse de consigne et $V_{cour}$ à la vitesse courante dudit véhicule, j0 correspondant à ladite valeur de secousse déterminée et k correspondant audit coefficient constant déterminé.

2. Procédé selon la revendication 1, pour lequel la valeur de secousse j0 est égale à 0.55 m.s$^{-3}$ et le coefficient k est égal à 8/27.

3. Procédé selon la revendication 1 ou 2, pour lequel ledit paramètre est compris entre une limite inférieure déterminée, notée $A_{inf}$, et une limite supérieure déterminée, notée $A_{sup}$.

4. Procédé selon la revendication 3, pour lequel ladite limite inférieure $A_{inf}$ est égale à -1.5 m.s$^{-2}$ et ladite limite supérieure $A_{sup}$ est égale à 1.5 m.s$^{-2}$.

5. Procédé selon l'une des revendications 1 à 4, pour lequel ledit système de régulation de vitesse correspond à un système de régulation adaptative de vitesse.

6. Programme d'ordinateur comportant des instructions pour la mise en œuvre du procédé selon l'une quelconque des revendications précédentes, lorsque ces instructions sont exécutées par un processeur.

7. Support d'enregistrement lisible par un ordinateur sur lequel est enregistré un programme d'ordinateur comprenant des instructions pour l'exécution des étapes du procédé selon l'une des revendications 1 à 5.

8. Dispositif (3) de contrôle d'accélération d'un véhicule, ledit dispositif (3) comprenant une mémoire (31) associée à au moins un processeur (30) configuré pour la mise en œuvre des étapes du procédé selon l'une quelconque des revendications 1 à 5.

9. Véhicule (10) comprenant le dispositif (3) selon la revendication 8.

## Patentansprüche

1. Verfahren zur Steuerung der Beschleunigung eines Fahrzeugs (10), das ein Geschwindigkeitsregelsystem an Bord hat, wobei das Verfahren die folgenden Schritte umfasst:

   - Empfangen (41) einer Information, die für eine Sollgeschwindigkeit für das Geschwindigkeitsregelsystem repräsentativ ist;
   - Bestimmen (42) einer Differenz zwischen der Sollgeschwindigkeit und einer aktuellen Geschwindigkeit des Fahrzeugs;

- Bestimmen (43) eines Parameters, der für einen maximalen Beschleunigungswert für das Geschwindigkeitsregelsystem repräsentativ ist, in Abhängigkeit von einem Vorzeichen der Differenz, dem Absolutwert der Differenz, einem bestimmten Schüttelwert und einem bestimmten konstanten Koeffizienten ;

- Steuerung (44) der Beschleunigung des Fahrzeugs (10) in Abhängigkeit von dem Parameter, wobei der Parameter, mit $A_{max}$ (DV) bezeichnet, gleich ist:

$$A_{max}(DV) = \text{sign}(DV) * \sqrt{k * j0 * |DV|},$$

wobei DV der Differenz entspricht mit DV = $V_{cons}$-$V_{cour}$, wobei $V_{cons}$ der Sollgeschwindigkeit und $V_{cour}$ der aktuellen Geschwindigkeit des Fahrzeugs entspricht, wobei j0 dem bestimmten Schüttelwert und k dem bestimmten konstanten Koeffizienten entspricht.

2. Verfahren nach Anspruch 1, bei dem der Schüttelwert j0 0,55 m.s$^{-3}$ beträgt und der Koeffizient k 8/27 beträgt.

3. Verfahren nach Anspruch 1 oder 2, bei dem der Parameter zwischen einer bestimmten unteren Grenze mit $A_{inf}$ und einer bestimmten oberen Grenze mit $A_{sup}$ liegt.

4. Verfahren nach Anspruch 3, bei dem die untere Grenze $A_{inf}$ -1,5 m.s$^{-2}$ beträgt und die obere Grenze $A_{sup}$ 1,5 m.s$^{-2}$ beträgt.

5. Verfahren nach einem der Ansprüche 1 bis 4, bei dem das Geschwindigkeitsregelsystem einem adaptiven Geschwindigkeitsregelsystem entspricht.

6. Computerprogramm mit Anweisungen zur Durchführung des Verfahrens nach einem der vorhergehenden Ansprüche, wenn diese Anweisungen von einem Prozessor ausgeführt werden.

7. Computerlesbares Aufzeichnungsmedium, auf dem ein Computerprogramm aufgezeichnet ist, das Befehle zum Ausführen der Schritte des Verfahrens nach einem der Ansprüche 1 bis 5 umfasst.

8. Vorrichtung (3) zur Steuerung der Beschleunigung eines Fahrzeugs, wobei die Vorrichtung (3) einen Speicher (31) umfasst, der mit mindestens einem Prozessor (30) verbunden ist, der zur Durchführung der Schritte des Verfahrens nach einem der Ansprüche 1 bis 5 konfiguriert ist.

9. Fahrzeug (10) mit der Vorrichtung (3) nach Anspruch 8.


**Claims**

1. A method of controlling the acceleration of a vehicle (10) carrying a speed control system, said method comprising the steps of:

- receipt (41) of information representative of a set speed for said speed control system;
- determination (42) of a difference between said set speed and a current speed of said vehicle;
- determination (43) of a parameter representative of a maximum acceleration value for said speed control system as a function of a sign of said difference, of the absolute value of said difference, of a determined shake value and of a determined constant ;
- control (44) of the acceleration of said vehicle (10) as a function of said parameter, said parameter, denoted $A_{max}$ (DV), being equal to:

$$A_{max}(DV) = \text{sign}(DV) * \sqrt{k * j0 * |DV|},$$

with DV corresponding to said difference with DV= $V_{cons}$-$V_{cour}$, where $V_{cons}$ corresponds to the set speed and $V_{cour}$ to the current speed of said vehicle, j0 corresponding to said determined shake value and k corresponding to said determined constant coefficient.

2. Method according to claim 1, for which the jolt value j0 is equal to 0.55 m.s$^{-3}$ and the coefficient k is equal to 8/27.

3. Method according to claim 1 or 2, for which the said parameter lies between a determined lower limit, denoted $A_{inf}$, and a determined upper limit, denoted $A_{sup}$.

4. The method according to claim 3, wherein said lower limit $A_{inf}$ is equal to -1.5 m.s$^{-2}$ and said upper limit $A_{sup}$ is equal to 1.5 m.s$^{-2}$.

5. Method according to one of claims 1 to 4, for which the said speed regulation system corresponds to an adaptive speed regulation system.

6. A computer plan including instructions for implementing the method according to any one of the previous claims, when these instructions are executed by a processor.

7. Computer-readable recording medium on which a computer plan is recorded, comprising instructions for executing the steps of the method according to one of claims 1 to 5.

8. Device (3) for controlling the acceleration of a vehicle, said device (3) comprising a memory (31) associated with at least one processor (30) configured for implementing the steps of the method according to any one of claims 1 to 5.

9. Vehicle (10) comprising the device (3) according to claim 8.

**[Fig. 1]**

**[Fig. 2]**

[Fig. 3]

[Fig. 4]

# EP 4 469 322 B1

## RÉFÉRENCES CITÉES DANS LA DESCRIPTION

**Documents brevets cités dans la description**

- US 2018126987 A1